# EUROPÄISCHE PATENTSCHRIFT

(11) **EP 0 856 672 B1**
(45) Veröffentlichungstag und Bekanntmachung des Hinweises auf die Patenterteilung: **04.07.2001**
(21) Anmeldenummer: 97121579.3
(22) Anmeldetag: 08.12.1997
(51) Int. Cl.: F16C 29/02, F16C 29/00, B41J 29/10, B41J 11/08, F16B 9/02

(54) **Einrichtung zur Halterung von Führungs-und Tragelementen**
Mounting device for guide and support elements
Dispositif de retenue d'éléments de guidage et de support

(30) Priorität: 03.02.1997 DE 29701809 U
(43) Veröffentlichungstag der Anmeldung: 05.08.1998
(73) Patentinhaber: PSI PRINTER SYSTEMS INTERNATIONAL GMBH, 57080 Siegen (DE)
(72) Erfinder: Adamek, Manfred, 57548 Kirchen (DE); Brandenburg, Klaus, 57258 Freudenberg (DE); Richter, Kurt Hermann, 57258 Freudenberg (DE)
(74) Vertreter: Meier, Friedrich, Dipl.-Ing.

(56) Entgegenhaltungen:
- DE-C- 920 378
- FR-A- 2 199 816
- US-A- 2 574 107
- US-A- 4 695 030
- PATENT ABSTRACTS OF JAPAN vol. 008, no. 160 (M-312), 25. Juli 1984 & JP 59 054813 A (TOKYO SHIBAURA DENKI KK), 29. März 1984

## Beschreibung

Die Erfindung bezieht sich auf eine Einrichtung zur Halterung von Führungs- und Tragelementen bei denen es, wie bei der Positionierung der Schlittenführung der Druckköpfe von Matrixdruckern gegenüber einem Druckwiderlager, auf die Einhaltung einer sehr genauen Parallelführung und Abstandshaltung ankommt. Die hierfür notwendigen Lager der Führungs - und Tragelemente sind meist in rahmenartigen Gestellen, die das Gehäuse eines Druckers bilden können, angeordnet. Diese müssen sehr aufwendig gebaut sein, wenn sie die notwendige Festigkeit zur Aufnahme und Halterung der Lager in der genauen Position haben sollen.

Die Führungs- und Tragelemente von Druckköpfen und dgl. müssen ebenso wie die Druckwiderlager nicht nur in sich eine hohe Steifigkeit haben, sie müssen mit Ihren Kopfteilen auch entsprechend genau und stabil in steifen Gestellen gelagert sein.

Zur Lagerung und Führung einer Tischgleiteinrichtung mit zwei Führungsstangen ist aus den JP Patent Abstracts 59- 54813 (A) veröffentlicht 1984, bekannt. Eine in sich steife, der Länge der Führungsstangen entsprechende Grundplatte ist mit im Abstand der Führungsstangen angeordneten, senkrecht zur Grundplatte abstehenden Lagerkörpern versehen, die den Kopfenden der Führungsstangen zugeordnet sind. Diese Lagerkörper sind auf den einander zugekehrten Seitenteilen mit rinnenförmigen Aufnahmen versehen, gegen die die Führungsstangen durch Blattfedern in die Betriebslage gedrückt werden. Diese Konstruktion ist aufwendig, setzt eine stabile Grundplatte oder zumindest einen stabilen Rahmen voraus und überträgt die bei der Bewegung der Gleiteinrichtung entstehenden Geräusche , auf Gehäuse und andere Geräteteile.

Die von einem Druckkopf erzeugten und am Druckwiderlager beim Drucken entstehenden Geräusche sollen als Körperschall in möglichst geringem Umfang auf das Gerät übertragen und nicht vom Gehäuse abgestrahlt werden. Zu diesem Zweck sind die Druckwiderlager, bestehend aus einem Druckbalken oder einer Druckwalze, meist elastisch im Gehäuse des Gerätes gehaltert. Durch diese Art der Lagerung müssen besondere Maßnahmen getroffen werden, um die Parallelbedingungen zwischen Druckkopflager und Druckerbalken einzuhalten.

Der zwischen der Geräuschabstrahlung und der Genauigkeit der Parallelführung übliche Kompromiß, besteht entweder in einem sehr aufwendigen Justiervorgang mit dem die Parallelabweichungen auf ein Minimum eingestellt und gegebenenfalls auch nachgestellt werden, oder in einer Reduzierung bestimmter Funktionen, wie Druckgeschwindigkeit oder Anzahl der möglichen Durchschläge.

Der Erfindung liegt die Aufgabe zugrunde, bei Geräten und Einrichtungen der beschriebenen Art, eine sehr genaue Parallelführung von Führungs - und Tragelementen zu erzielen und gleichzeitig Voraussetzungen zu schaffen, die Halterungen bzw. die Lager von den übrigen Geräteteilen, insbes. dem Gerätegehäuse akustisch weitgehend zu entkoppeln.

Gemäß der Erfindung wird diese Aufgabe dadurch gelöst, daß die Lager aus plattenförmigen Lagerschilden bestehen, in die Durchbrüche zur Aufnahme der Führungs- und Tragelemente eingearbeitet sind, in deren Ränder einseitig und im Abstand paßgenau bearbeitete Anschlagflächen und gegenüberliegend hierzu, Ausnehmungen zur Aufnahme von Befestigungselementen derart eingearbeitet sind, daß die Enden der Führungs- und Tragelemente durch eingesetzte Befestigungsteile gegen die Anschlagflächen gepreßt werden.

Durch diese paßgenauen Anschläge wird erreicht, daß der Abstand und damit auch die exakte und parallele Anordnung der Führung für einen Druckkopf von Matrixdruckern gegenüber dem Druckwiderlager auch dann sichergestellt ist, wenn hinsichtlich der Befestigung der Lagerschilde im Gehäuse geringe Abweichungen auftreten.

Die Befestigung der Führungs- und Tragelemente in den Durchbrüchen wird durch die Anschlagflächen unkritisch, so daß die den Anschlagflächen gegenüberliegenden Ränder der Durchbrüche mit Schrägflächen und Gewinden versehen werden können, in die zur Erzielung einer Keilwirkung auch Schrauben eingesetzt werden können.

Zur akustischen Entkopplung der Lagerschilde und damit der Geräuscherzeuger vom Gehäuse werden die Lagerschilde mit dem Gehäuse bzw. tragenden Rahmenteilen, über elastische Träger, vorzugsweise aus schalldämpfenden Material, verbunden. Diese Verbindung kann durch kleben schweißen oder vulkanisieren erfolgen. Besonders vorteilhaft ist es, den elastischen Träger flächig auszubilden.

Flächige Lagerschilde der beschriebenen Art sind geeignet, zusätzlich Bauteile mit Geräuschbildung, wie Schrittmotoren, ohne zusätzlichen Aufwand aufzunehmen. Alle an den Lagerschilden gehalterten Teile, sind von den übrigen Gehäuseteilen akustisch durch die elastischen Träger entkoppelt.

An Hand einer schematischen Darstellung eines Druckers wird das der Erfindung zugrundeliegende Prinzip erläutert und die Wirkungsweise beschrieben.

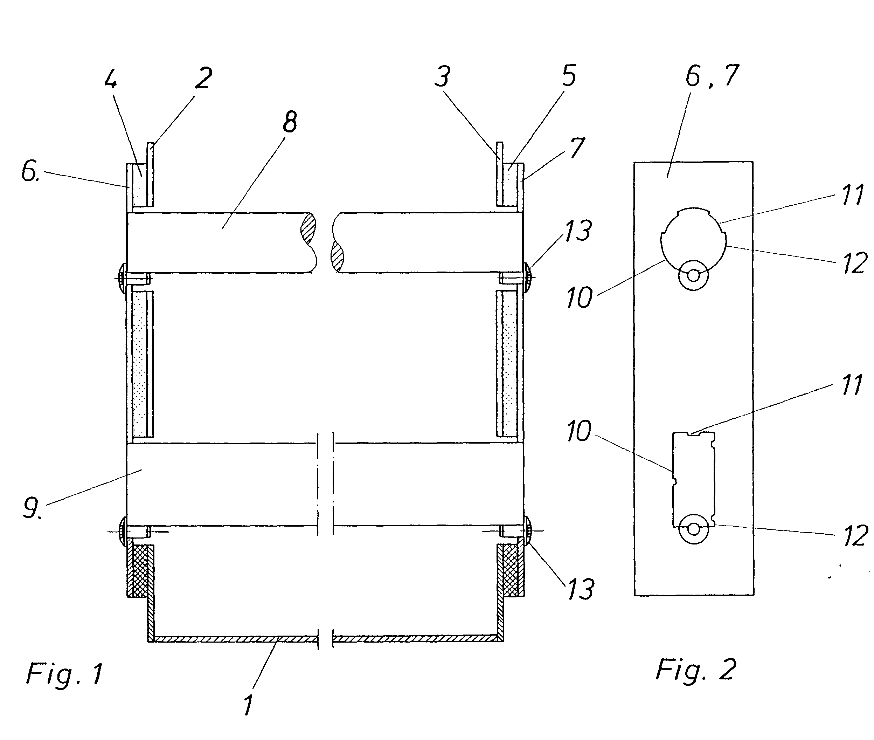

Die Figur 1 zeigt im Aufriß eine Bodenplatte 1, die mit den Seitenwandungen 2 und 3 das Rahmengestell oder Gehäuse für einen Drucker bilden können.

Die Figur 2 zeigt ein Lagerschild 6,7 in Seitenansicht.

Mit den Seitenwandungen 2,3 sind geräuschdämpfende, flächige Träger 4 und 5 unlösbar verbunden. Die Lagerschilde 6 und 7 sind mit den Trägern 4,5 und diese mit den Seitenwandungen 2,3 durch Kleben oder einem Vulkanisiervorgang unlösbar verbunden. Dadurch bilden die Lagerschilde 6,7 mit den Seitenwandungen 2,3 eine starre Einheit. Zur Aufnahme des Kopfes der Schlittenführung 8 für den nicht gezeichneten Druckkopf, und des Druckbalkens 9 für das Druckwiderlager, sind in die Lagerschilde 6 und 7 Durchbrüche 10 eingearbeitet, deren oben liegende Teilflächen 11, paßgenau hinsichtlich der Lage und des gegenseitigen Abstandes bearbeitet sind.

Die den paßgenauen Teilflächen 11 gegenüberliegenden Teile der Durchbrüche 10 sind mit Ausnehmungen 12 versehen, in die Schrauben 13 oder andere geeignete Befestigungselemente eingesetzt sind, die mit einer Keilwirkung die Schlittenführung 8 und den Druckbalken 9 gegen die Teilflächen 11 pressen und damit in genauer Position haltern. Diese Ausnehmungen 12 und die übrigen Randteile der Durchbrüche 10 können mit gewissen Toleranzen gefertigt sein, weil durch das Anpressen an die paßgenauen Flächen 11, der gegenseitige Abstand der Schlittenführung 8 und des Druckbalkens 9 problemlos gewährleistet ist. Derartige Teilflächen 11 lassen sich sehr viel einfacher und damit auch billiger herstellen, als Bohrungen oder Durchbrüche in die Führungs - und Tragelemente mit den Kopfteilen paßgenau einzusetzen sind.

Die kongruenten Durchbrüche in den Trägern 4 und 5 sowie gegebenenfalls auch in den Seitenwandungen 2,3, können mit großem Spiel gegenüber der Schlittenführung und dem Druckbalken 9 gearbeitet sein.

Es ist ersichtlich, daß die Lagerschilde 6,7 auch zur Aufnahme weiterer Tragteile geeignet sind, Besonders geeignet sind die Lagerschilde zur Entkopplung von Geräusche erzeugenden Bauelementen wie Relais oder Antrieben, z.B. Schrittmotoren. Die Lagerschilde 6,7 können auf den gleichen Werkzeugen hergestellt werden, was die Paßgenauigkeit auch bezüglich der Abstände ohne Aufwand sicherstellt.

## Patentansprüche

1. Einrichtung zur Halterung von Führungs- und Tragelementen (8,9) mit genauer Positionierung und Abstandshaltung, insbesondere für die Schlittenführung (8) eines Druckkopfes von Matrixdruckern und dem zugehörigen Druckwiderlager (9), unter Verwendung von mit einem Gehäuse (2,3) verbundenen, seitlich der Führungs- und Tragelemente (8,9) angeordneten Lagern (6,7), **dadurch gekennzeichnet, daß** die Lager aus plattenförmigen Lagerschilden (6,7) bestehen, in die Durchbrüche (10) zur Aufnahme der Führungs - und Tragelemente (8,9) eingearbeitet sind, in deren Ränder einseitig und im Abstand paßgenau bearbeitete Anschlagflächen (11) und gegenüberliegend hierzu, Ausnehmungen (12) zur Aufnahme von Befestigungselementen (13) derart gearbeitet sind, daß die Enden der Führungs- und Tragelemente (8,9) durch eingesetzte Befestigungselemente (13) gegen die Anschlagflächen (11) gepreßt werden.

2. Einrichtung nach Anspruch 1, **dadurch gekennzeichnet, daß** die Ausnehmungen (12) mit Schrägflächen zur Erzielung einer Keilwirkung versehen sind.

3. Einrichtung nach Anspruch 1 und 2, **dadurch gekennzeichnet, daß** die Ausnehmungen (12) mit einem Gewinde versehen sind, in das Schrauben (13) mit Keilwirkung eingesetzt sind.

4. Einrichtung nach Anspruch 1 bis 3, **dadurch gekennzeichnet, daß** die plattenförmigen Lagerschilde (6,7) mit tragenden Teilen (2,3), insbes. mit einem Gehäuse, über elastische Träger (4,5), vorzugsweise aus dämpfenden Material, verbunden sind.

5. Einrichtung nach Anspruch 4, **dadurch gekennzeichnet, daß** die elastischen Träger (4,5) mit Verbindungselementen und / oder den tragenden Gehäuseteilen (2,3) verklebt, verschweißt oder durch vulkanisieren verbunden sind.

6. Einrichtung nach Anspruch 4 und 5, **dadurch gekennzeichnet, daß** die elastischen Träger (4,5) flächig ausgebildet sind.

7. Einrichtung nach Anspruch 1 bis 6, **dadurch gekennzeichnet, daß** die Lagerschilde (6,7) zur zusätzlichen Halterung von Geräuschquellen, wie diskontinuierlich arbeitende Antriebe, insbes. Schrittmotoren ausgebildet sind.

## Claims

1. Device for holding guiding and supporting elements (8, 9) with precise positioning and spacing, in particular for the carriage guide (8) of a print head of matrix printers and [sic] the associated abutment (9), using bearings (6, 7) which are connected to a housing (2, 3) and are arranged at the sides of the guiding and supporting elements (8, 9), characterized in that the bearings comprise plate-shaped bearing shields (6, 7) into which apertures (10) for receiving the guiding and supporting elements (8, 9) are incorporated, the edges of which apertures have made in them stop surfaces (11) which are machined on one side and are spaced apart in a precisely matching manner, and, opposite thereto, recesses (12) for receiving fastening elements (13), in such a manner that the ends of the guiding and supporting elements (8, 9) are pressed against the stop surfaces (11) by inserted fastening elements (13).

2. Device according to Claim 1, characterized in that the recesses (12) are provided with sloping surfaces in order to obtain a wedging effect.

3. Device according to Claims 1 and 2, characterized in that the recesses (12) are provided with a thread into which screws (13) can be inserted with a wedging effect.

4. Device according to Claims 1 to 3, characterized in that the plate-shaped bearing shields (6, 7) are connected to supporting parts (2, 3), in particular to a housing, via flexible supports (4, 5), preferably made of damping material.

5. Device according to Claim 4, characterized in that the flexible supports (4, 5) are bonded, welded or connected by vulcanizing to connecting elements and/or to the supporting housing parts (2, 3).

6. Device according to Claims 4 and 5, characterized in that the flexible supports (4, 5) are of planar design.

7. Device according to Claims 1 to 6, characterized in that the bearing shields (6, 7) are designed for the additional holding of sources of noise, such as intermittently operating drives, in particular stepping motors.

## Revendications

1. Dispositif pour la fixation d'éléments de guidage et de support (8, 9) avec un positionnement et un écartement précis, en particulier pour la glissière du chariot (8) d'une tête d'impression d'imprimantes matricielles et la contre-forme d'impression associée (9), en utilisant des appuis (6, 7) disposés sur le côté des éléments de guidage et de support (8, 9) et assemblés à un boîtier (2, 3), caractérisé en ce que les appuis se composent de flasques d'appui en forme de plaques (6, 7), dans lesquels sont usinées des ouvertures (10) destinées à recevoir les éléments de guidage et de support (8, 9), et dans les bords desquels des faces de butée (11) et, en face de celles-ci, des creux (12) destinés à recevoir des éléments de fixation (13) sont usinés avec une finition d'ajustage précise sur un côté et sur leur écartement, d'une façon telle que les extrémités des éléments de guidage et de support (8, 9) soient pressées contre les faces de butée (11) par la pose d'éléments de fixation (13).

2. Dispositif suivant la revendication 1, caractérisé en ce que les creux (12) sont pourvus de faces obliques pour l'obtention d'un effet de coin.

3. Dispositif suivant une revendication 1 et 2, caractérisé en ce que les creux (12) sont pourvus d'un filet, dans lequel des vis (13) sont insérées avec un effet de coin.

4. Dispositif suivant une revendication 1 à 3, caractérisé en ce que les flasques d'appui en forme de plaques (6, 7) sont assemblés à des parties portantes (2, 3), en particulier à un boîtier, par des supports élastiques (4, 5), de préférence en une matière insonorisante.

5. Dispositif suivant la revendication 4, caractérisé en ce que les supports élastiques (4, 5) sont assemblés avec des éléments d'assemblage et/ou collés, soudés ou assemblés par vulcanisation aux parties portantes (2, 3) du boîtier.

6. Dispositif suivant une revendication 4 et 5, caractérisé en ce que les supports élastiques (4, 5) sont de forme plate.

7. Dispositif suivant une revendication 1 à 6, caractérisé en ce que les flasques d'appui (6, 7) sont configurés pour la fixation additionnelle de sources de bruit, comme des moteurs à fonctionnement discontinu, en particulier des moteurs pas à pas.
